# EUROPEAN PATENT APPLICATION

(11) **EP 4 732 970 A1**
(43) Date of publication of application: **29.04.2026**
(21) Application number: 24851746.8
(22) Date of filing: 01.08.2024
(51) Int. Cl.: B21D 22/20, B21D 22/26, B62D 21/15, B62D 25/00, F16F 7/00, F16F 7/12

(54) **METHOD FOR MANUFACTURING AUTOMOBILE COMPONENT**

(30) Priority: 08.08.2023 JP 2023128939; 24.06.2024 JP 2024101022
(71) Applicant: JFE Steel Corporation, Tokyo, 100-0011 (JP)
(72) Inventor: HIGAI, Kazuhiko, Tokyo 100-0011 (JP); SHIOZAKI, Tsuyoshi, Tokyo 100-0011 (JP); TAMAI, Yoshikiyo, Tokyo 100-0011 (JP)
(74) Representative: Hoffmann Eitle
(86) International application number: PCT/JP2024/027569
(87) International publication number: WO 2025/033321

(57) **Abstract**

A manufacturing method of an automobile part 1 according to the present invention includes: a resin application step S1 of applying resin 7 to a steel sheet 11 before molding; a steel sheet patch installation step S3 of installing a steel sheet patch 13 on the steel sheet 11 to which the resin 7 is applied in such a manner as to cover the resin 7; a pre-baking step S5 of pre-baking a sandwich structure member 15 having a sandwich structure in which the resin 7 is sandwiched between the steel sheet 11 and the steel sheet patch 13 in such a manner that the resin 7 has an elastic modulus of 45 MPa or more and ductility of 10% or more; and a press molding step S7 of press molding the pre-baked sandwich structure member 15 into a part shape of the automobile part 1.

## Description

### Field

The present invention relates to a manufacturing method of an automobile part having a sandwich structure in which resin is sandwiched between steel sheets.

### Background

A front side member that is a frame part of an automobile is a part having a long length in a vehicle front-rear direction and installed in a vehicle front portion, and is a part that absorbs collision energy at the time of vehicle collision by being axially crushed and deformed at the time of the vehicle collision. A side sill (locker) and a center pillar are parts that absorb the collision energy by being bent when a collision load is input from a side of a vehicle body. These parts absorb the collision energy at the time of the vehicle collision, suppress a cabin deformation at the time of the collision, and protect an occupant.

The front side member, the side sill, and the center pillar need to reliably absorb the vehicle collision energy, and need a structure that controls a deformation mode. On the other hand, since automobile parts are also required to be reduced in weight, a technique of combining resin with the above parts and achieving both improvement in collision energy absorbing performance and stiffness and reduction in weight (multi-material parts) has been proposed.

Patent Literature 1 discloses an automobile collision energy absorbing part that absorbs collision energy by being axially crushed when a collision load is input from a front side or rear side of a vehicle body. The automobile collision energy absorbing part of Patent Literature 1 can also improve vibration-damping properties by absorbing vibration from an automobile engine and vibration input to the vehicle body from each direction during traveling of the automobile. In addition, Patent Literature 2 discloses a vehicle body frame part that absorbs collision energy by being bent when a collision load is input from a side of a vehicle body.

In each of the parts of Patent Literature 1 and Patent Literature 2, resin is applied or pasted to an inner surface of a metal main body member (tubular part, hat-shaped cross section part, or U-shaped cross section part), and a metal detachment prevention member having a U-shaped cross section is arranged in such a manner as to cover a surface of the resin. By the arrangement of the resin on the inner surface of the main body member, the resin is sandwiched between a steel sheet and a steel sheet in a process of axial crushing in which crushing is performed in a bellows-shaped manner in an axial direction of the part or bending crushing in which crushing is performed in a direction perpendicular to the axial direction, whereby a bending radius at the time of deformation is increased and a main body member is hardly fractured, and collision energy absorbing performance is improved. As described above, the part of each of Patent Literature 1 and Patent Literature 2 has the sandwich structure in which the resin is sandwiched between the metal main body member and the metal detachment prevention member, whereby both the weight reduction and an improvement in the collision energy absorbing performance by prevention of a fracture of the main body member at the time of the axial crushing or bending crushing can be achieved. Many manufacturing methods of a part having a sandwich structure in which resin is sandwiched between metal sheets have been proposed.

Patent Literature 1 discloses a method of manufacturing a part having a sandwich structure by applying or pasting resin to an inner surface of a tube-like member, arranging a detachment prevention member in such a manner as to cover the resin, joining the detachment prevention member to the tube-like member, and then performing heat treatment of these members. In addition, Patent Literature 1 also discloses a method of applying or pasting resin to a detachment prevention member, making the resin abut to an inner surface of a tube-like member, joining the detachment prevention member to the inner surface of the tube-like member, and performing heat treatment of these members.

In addition, Patent Literature 3 discloses a frame structure (center pillar) of a vehicle body in which a filler material (such as epoxy resin) is foamed and filled in space between an outer panel and a reinforcement, and the following method is described as a method of assembling the frame structure. First, an unfoamed filler material processed into a sheet shape is pasted and set on a surface on a side of the outer panel in the reinforcement. Then, the reinforcement to which the filler material is pasted is set on the outer panel, and flange portions of the both are joined to each other by spot welding. Then, after assembly of the entire vehicle body is completed, electrodeposition coating is performed on the vehicle body, and thermosetting foaming of the filler material is performed by drying heat at that time.

In addition, Patent Literature 4 discloses the following method as a manufacturing method of an automobile partial composite damping part to prevent automobile noise. First, resin having vibration-damping properties is applied to a restraint sheet made of a steel sheet or the like, and a solvent in a coating material on the restraint sheet is volatilized in a drying furnace. Then, the restraint sheet is laminated on a predetermined position of a steel sheet included in a vehicle body before press molding, and is heated and crimped. Then, the steel sheet to which the restraint sheet is partially joined adhesively is press-molded and an automobile partial composite damping part is manufactured.

In addition, Patent Literature 5 discloses a manufacturing method of a metal sheet member in which method first and second metal sheets are overlapped with each other via a resin adhesive, the first and second metal sheets are press-molded, and the resin adhesive is cured after the press-molding.

In addition, Patent Literature 6 discloses a vehicle body manufacturing method of joining a first vehicle body member and a second vehicle body member via a damping resin adhesive, precuring the damping resin adhesive in a portion to be a lower end region in an assembling posture of the joined body, and then joining the joined body to a third vehicle body member in the assembling posture.

### Citation List

### Patent Literature

Patent Literature 1: Japanese Patent Application Laid-open No. 2020-100183
Patent Literature 2: Japanese Patent Application Laid-open No. 2020-117039
Patent Literature 3: Japanese Patent Application Laid-open No. 2001-048054
Patent Literature 4: Japanese Patent Application Laid-open No. 11-141005
Patent Literature 5: Japanese Patent Application Laid-open No. 2020-183078
Patent Literature 6: Japanese Patent Application Laid-open No. 2021-126930

### Summary

### Technical Problem

As described above, although various manufacturing methods of a part having a sandwich structure in which resin is sandwiched between a metal sheet and a metal sheet have been proposed, these manufacturing methods have the following problems.

First, in the manufacturing method of Patent Literature 3, since a filler material is foamed and filled in closed sectional space formed in existing parts such as the outer panel and the reinforcement of the center pillar, a place where resin can be arranged is limited. Thus, it is not possible to arbitrarily reinforce a portion exhibiting an effect on the vibration-damping properties and stiffness.

On the other hand, in the manufacturing method of Patent Literature 1, since the detachment prevention member is attached in such a manner as to cover the resin after the resin is applied or pasted to the tube-like member, the resin can be arranged at an arbitrary portion (such as a shoulder part of a punch of an outer part included in the tube-like member) where stiffness is desired to be increased. However, in the above manufacturing method, since it is necessary to add a press molding step of the detachment prevention member separately from a press molding step of the tube-like member, a manufacturing cost increases.

In addition, in the manufacturing method of Patent Literature 1, since the resin is applied or pasted to the member after the press molding, it may be difficult to apply or paste the resin with a uniform thickness to a portion where an uneven shape is imparted to a member surface. Thus, a portion to which the resin is applied or pasted is limited to a portion having a relatively smooth surface with less unevenness on the surface.

On the other hand, in the manufacturing method of Patent Literature 4, since the resin is applied to the steel sheet (restraint sheet) before the press molding, it is difficult to be limited by a surface uneven shape after the press molding of a portion to which the resin is applied. Then, after the restraint sheet is partially joined to the steel sheet (blank) adhesively, these are integrally press-molded. Thus, addition of a press molding step is not generated. However, in the above manufacturing method, the restraint sheet to which the resin is applied is laminated on the steel sheet (blank), and then press-molded after heating and crimping. Thus, the resin may be completely cured by the heating. When the resin is completely cured, ductility of the resin decreases, and a resin layer may be fractured during the press molding. In a case of the collision energy absorbing part in the above described manner, when the resin layer is fractured, a fracture of the main body member at the time of the axial crushing or the bending crushing cannot be sufficiently prevented. Thus, expected collision energy absorbing performance cannot be acquired. In addition, the vibration-damping properties may be deteriorated.

On the other hand, in the manufacturing method of Patent Literature 5, the first and second metal sheets are overlapped with each other via the resin adhesive, and the resin adhesive is cured after the press molding. Since the resin adhesive is not cured during the press molding, the resin is not fractured. However, when the press molding is performed without curing of the resin adhesive, the resin adhesive may leak from a gap between the first and second metal sheets due to a surface pressure load during the press molding. When the resin adhesive leaks from between the metal sheets during the press molding, an inner side of a die is contaminated with the resin, and continuous production becomes impossible.

In addition, in an automobile part that absorbs collision energy at the time of a vehicle collision, resin included in a sandwich structure needs to have a predetermined thickness in order to secure collision energy absorbing performance. However, when the resin adhesive is press-molded without being cured as in Patent Literature 5, the resin leaks from between the two metal sheets, and the predetermined resin thickness cannot be formed.

On the other hand, Patent Literature 6 discloses a method in which the first vehicle body member and the second vehicle body member are joined by utilization of the damping resin adhesive made of resin, the damping resin adhesive is precured by heating or the like, and then the joined body is joined to the third vehicle body member. This method prevents dropping of the damping resin adhesive when the press-molded automobile parts are adhered to each other and the vehicle body is assembled, and thus cannot prevent leakage (or protrusion) of the resin due to a pressing pressure of when the two metal sheets sandwiching the resin are press-molded.

The present invention has been made to solve the above problems, and an object thereof is to provide a manufacturing method of an automobile part capable of manufacturing an automobile part having a sandwich structure in which resin is sandwiched between steel sheets (metal sheets) at a low cost and preventing a fracture of the resin during manufacturing.

### Solution to Problem

The inventors have intensively studied a method of preventing a fracture and leakage (protrusion) of resin in a manufacturing method in which a sandwich structure is formed on steel sheets before press molding and then the press molding into a part shape is performed as described in Patent Literature 4. When the resin is heated before the press molding and the resin is completely cured, the resin may be fractured at the time of the press molding. On the other hand, when heating before the press molding is not performed, the resin leaks out from between the steel sheet and the steel sheet due to pressurization at the time of the press molding, and a required resin thickness cannot be secured. Furthermore, there is a possibility that the leaked resin contaminates the inside of a press die, and problems in part molding and quality are generated.

When a resin adjusted to have high viscosity and high elasticity in advance is applied, leakage of the resin at the time of press molding can be prevented without heating before the press molding. However, since the resin having the high viscosity and the high elasticity is inferior in coatability, coating time is extended and productivity is lowered. In addition, there is also a problem that it is difficult to apply the resin having the high viscosity and the high elasticity with a uniform thickness.

Thus, the inventor has found that the above problems can be solved by application of a resin having viscosity superior in coatability to a steel sheet and performance of pre-baking before press molding under a heat treatment condition in which the resin is not completely cured. The present invention has been made on the basis of such findings, and specifically includes the following configurations.

According to a first embodiment of the present invention, a manufacturing method of an automobile part, the method includes: a resin application step of applying a thermosetting resin to a steel sheet before molding; a steel sheet patch installation step of installing a steel sheet patch in such a manner as to cover the resin on the steel sheet to which the resin is applied; a pre-baking step of pre-baking a sandwich structure member having a sandwich structure, in which the resin is sandwiched between the steel sheet and the steel sheet patch, in such a manner that the resin has an elastic modulus of 45 MPa or more and a ductility of 10% or more; and a press molding step of press molding the pre-baked sandwich structure member into a part shape of the automobile part.

According to a second embodiment of the present invention, a manufacturing method of an automobile part, the method includes: a resin pasting step of pasting a thermosetting resin, which is formed in a sheet shape, to a steel sheet before molding; a steel sheet patch installation step of installing a steel sheet patch in such a manner as to cover the resin on the steel sheet to which the resin is pasted; a pre-baking step of pre-baking a sandwich structure member having a sandwich structure, in which the resin is sandwiched between the steel sheet and the steel sheet patch, in such a manner that the resin has an elastic modulus of 45 MPa or more and ductility of 10% or more; and a press molding step of press molding the pre-baked sandwich structure member into a part shape of the automobile part.

Preferably, the manufacturing method of an automobile part further include a welding step of welding the steel sheet and the steel sheet patch of the automobile part press-molded by the press molding step.

Preferably, in the manufacturing method of an automobile part, the resin have a thickness of 0.2 mm or more and 3 mm or less.

Preferably, in the manufacturing method of an automobile part, the resin be a thermosetting rubber-modified epoxy resin.

### Advantageous Effects of Invention

In the present invention, when a pre-baking step of pre-baking a sandwich structure member in such a manner that the resin has an elastic modulus of 45 MPa or more and ductility of 10% or more is included, it is possible to prevent both protrusion and a fracture of the resin at the time of press molding. Furthermore, since the sandwich structure is formed and then press-molded into a part shape, a main body part and a patch can be press-molded at a time. Thus, the number of steps can be reduced as compared with the related-art example in which each part is individually press-molded, and an automobile part having a sandwich structure can be manufactured at a low cost.

### Brief Description of Drawings

FIG. 1 is a view for describing a manufacturing method of an automobile part according to an embodiment.
FIG. 2 is an external view of the automobile part to be an object in the embodiment.
FIG. 3 is a graph conceptually illustrating a relationship between heating time, viscosity, elastic modulus, and ductility of the resin of when a thermosetting resin is heated.
FIG. 4 is a view for describing another aspect of the manufacturing method of the automobile part according to the embodiment.
FIG. 5 is a view illustrating an example of a resin application (patch) range according to an example (part 1).
FIG. 6 is a view illustrating an example of a resin application (patch) range according to the example (part 2).
FIG. 7 is a view for describing an axial crush test according to the example.
FIG. 8 is a view illustrating a precuring range of a resin of a comparative example according to the example (part 1).
FIG. 9 is a view illustrating the precuring range of the resin of the comparative example according to the example (part 2).

### Description of Embodiments

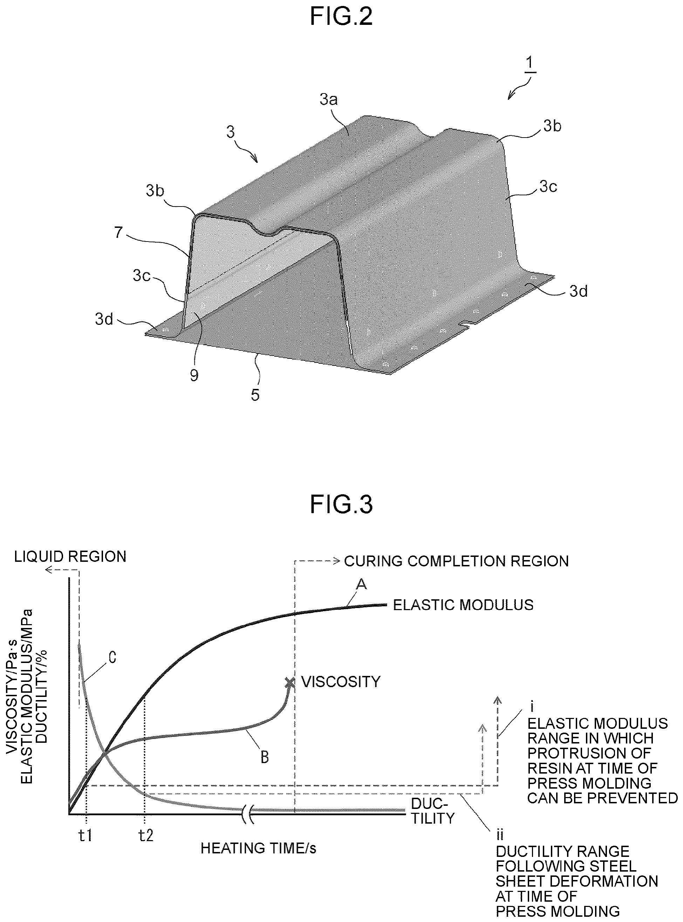

A manufacturing method of an automobile part according to an embodiment of the present invention is a method of manufacturing an automobile part having a sandwich structure in which resin is sandwiched between a steel sheet and a steel sheet. Prior to the description of the present embodiment, first, an automobile part that is an object of the present invention will be described with reference to FIG. 2.

An automobile part 1 illustrated in FIG. 2 is an example of the automobile part having the sandwich structure which part is the object of the present invention. The automobile part 1 is used for vehicle body frame parts such as a front side member, a side sill (locker), and a center pillar, and absorbs collision energy by being axially crushed or bending-crushed when a collision load is input to the vehicle body.

The automobile part 1 includes an outer part 3, an inner part 5 joined to the outer part 3, resin 7 applied to an inner surface of the outer part 3, and a patch 9 that covers the resin 7 and that is joined to the inner surface of the outer part 3.

The outer part 3 is a member having a hat-shaped section and formed of a steel sheet, and includes a top portion 3a, a pair of side wall portions 3c continuous from the top portion 3a via a shoulder portion 3b, and flange portions 3d respectively continuous from the side wall portions 3c. The inner part 5 is a flat member formed of a steel sheet, and is joined to the flange portion 3d of the outer part 3.

The resin 7 is applied to inner surfaces of the top portion 3a, the shoulder portion 3b, and the side wall portions 3c of the outer part 3. The patch 9 is a member that is formed of a steel sheet and prevents detachment of the resin 7 from the outer part 3 when the automobile part is deformed due to vehicle collision. The patch 9 is arranged inside the outer part 3 in such a manner as to cover the resin 7, and both end portions of the patch 9 are welded and joined to the inner surfaces of the side wall portions 3c of the outer part 3.

The resin 7 is adhered to each of the outer part 3 and the patch 9 with predetermined adhesive strength through a pre-baking step S5 and a main baking step performed before or after vehicle body assembly (described later). The final adhesive strength after the main baking step is preferably 10 MPa or more.

The resin 7 of the automobile part 1 is not limited to what is formed by application of a coating material, but may be what is formed by pasting of a sheet-shaped resin with an adhesive or the like.

As described above, the automobile part 1 has a sandwich structure in which the resin 7 is sandwiched between the outer part 3 and the patch 9 formed of a steel sheet. As a result, surface stiffness of the top portion 3a, the shoulder portion 3b, and the side wall portions 3c of the outer part 3 is improved, and a fracture of the steel sheet in the process of axial crushing or bending crushing as described above is prevented, whereby collision energy absorbing performance of the automobile part 1 is improved. In addition, since the resin 7 also functions as a damping material that absorbs vibration, vibration-damping performance of the automobile part 1 is also improved since the sandwich structure is included. Examples of a type of the steel sheet used for the outer part 3, the inner part 5, and the patch 9 include a cold-rolled steel sheet, a hot-rolled steel sheet, a stainless steel sheet, a zinc-based plated steel sheet, a zinc alloy-based plated steel sheet, and an aluminum alloy-based plated steel sheet.

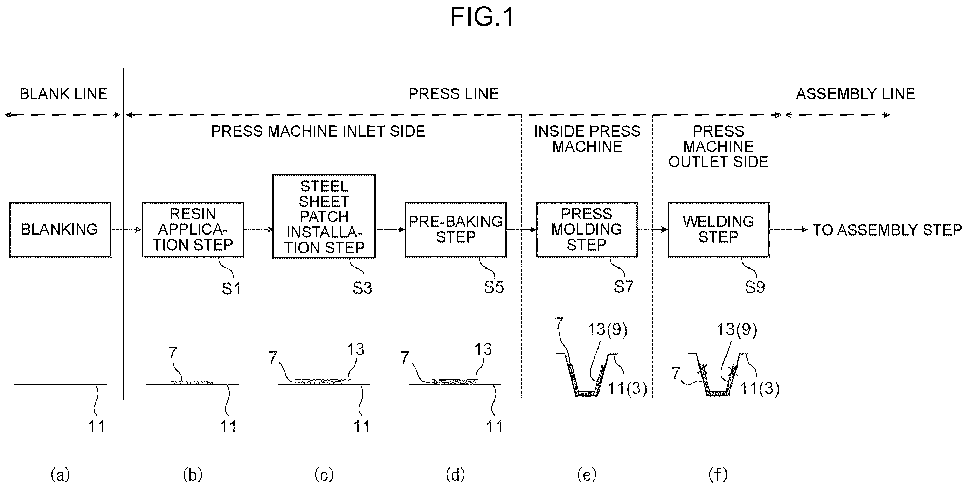

In the present embodiment, a method of manufacturing the automobile part 1 described above will be described. As illustrated in FIG. 1, the manufacturing method of the automobile part 1 in the present embodiment includes a resin application step S1, a steel sheet patch installation step S3, a pre-baking step S5, a press molding step S7, and a welding step S9. As illustrated in FIG. 1, in the present embodiment, the resin application step S1 to the welding step S9 are performed in one press line. Part (a) of FIG. 1 to part (f) of FIG. 1 are views schematically illustrating a manufacturing process of the outer part 3 having the sandwich structure. After the welding step S9, in an assembly step performed in an assembly line, the automobile part 1 in FIG. 2 can be manufactured by joining of the inner part 5 to the outer part 3 in part (f) of FIG. 1.

### <Resin application step>

As illustrated in part (b) of FIG. 1, the resin application step S1 is a step of applying the resin 7 to a steel sheet 11 that is a blank material before the outer part 3 is molded. The steel sheet 11 blanked in a blank shape of the outer part 3 in a blank line (see part (a) of FIG. 1) is transferred to the press line by a transfer device such as a feeder with a suction bar or a conveyor. A robot equipped with a dispenser (liquid fixed amount discharge device) is arranged on the press line, and the dispenser-equipped robot applies the resin 7 having a predetermined thickness to a predetermined range of the steel sheet 11 transferred to the press line.

The method of applying the resin 7 is not limited to the above, and, for example, the resin 7 may be applied by spraying with a spray nozzle (electrostatic coating), or may be applied with a brush or the like. However, application by the coating robot with the dispenser is preferable because an application amount can be accurately and quantitatively supplied, and the resin 7 can be applied to a predetermined range of the steel sheet 11 with a predetermined thickness.

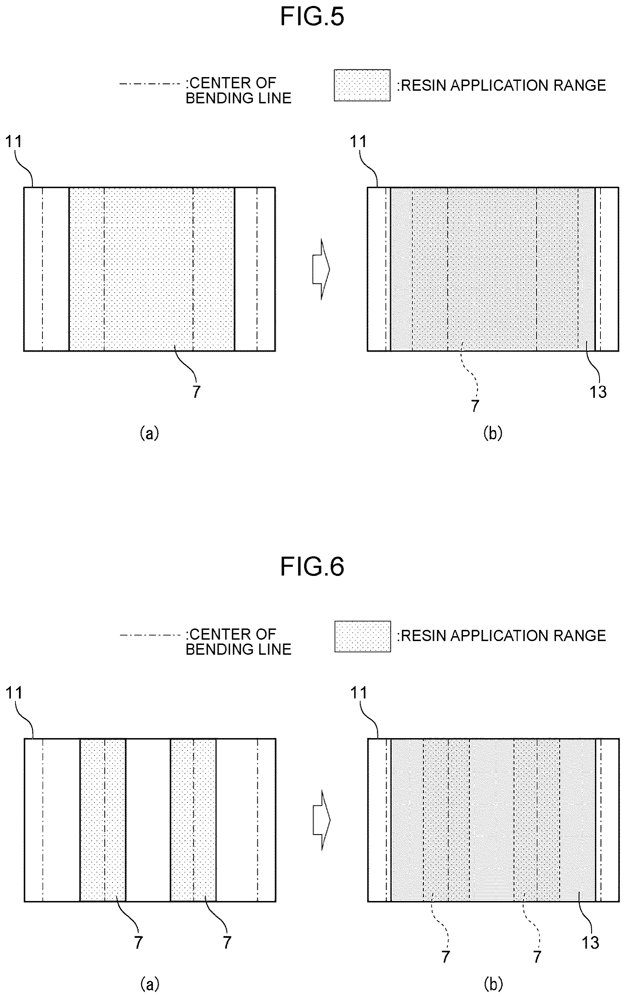

The range to which the resin 7 is applied is desirably set to include a portion effective for improving the collision energy absorbing performance of the automobile part 1 and a portion having an effect on the vibration-damping properties and stiffness. For example, in a case of the automobile part 1 of FIG. 2, since it is possible to improve the collision energy absorbing performance of the automobile part 1 by allowing the resin to exist on the shoulder portion 3b of the outer part 3 in the process of axial crushing or bending crushing, the resin 7 may be applied to at least a portion corresponding to the shoulder portion 3b in the steel sheet 11. Thus, the resin 7 may be applied to the entire portion excluding a portion welded with the patch 9 and the inner part 5 in such a manner that the portion corresponding to the shoulder portion 3b is included as illustrated in part (a) of FIG. 5, or the resin 7 may be applied only to the portion corresponding to the shoulder portion 3b as illustrated in part (a) of FIG. 6.

When the application thickness of the resin 7 is less than 0.2 mm, it is difficult to uniformly apply the resin 7. In addition, when the application thickness of the resin 7 is more than 3 mm, cost is required. From the above reason, the thickness (application thickness) of the resin 7 is preferably 0.2 mm or more and 3 mm or less.

Examples of a type of the resin 7 include a thermosetting resin. Examples of the thermosetting resin include an epoxy resin, a urethane resin, an ester resin, a phenolic resin, a melamine resin, and a urea resin. Specifically, since having high ductility after heat curing and being less likely to be fractured when press molding is performed after pre-baking (pre-heating), a rubber-modified epoxy resin is suitable.

### <Steel sheet patch installation step>

As illustrated in part (c) of FIG. 1, the steel sheet patch installation step S3 is a step of installing a steel sheet patch 13 on the steel sheet 11, to which the resin 7 is applied, in such a manner as to cover the resin 7. The steel sheet patch is a blank material before the patch 9 (see FIG. 2) is press-molded. The steel sheet 11 to which the resin 7 is applied in the resin application step S1 is transferred by the transfer device to a steel sheet conveyance robot arranged downstream of the dispenser-equipped robot. The steel sheet conveyance robot installs the steel sheet patch 13 at a predetermined position of the steel sheet 11 in such a manner as to cover the resin 7.

The resin 7 is applied onto the steel sheet 11, and the steel sheet patch 13 is installed in such a manner as to cover the resin 7, whereby a sandwich structure in which the resin 7 is sandwiched between the steel sheet 11 and the steel sheet patch 13 is formed. Hereinafter, the member having this sandwich structure in part (c) of FIG. 1 is referred to as a sandwich structure member 15.

### <Pre-baking step>

As illustrated in part (d) of FIG. 1, the pre-baking step S5 is a step of pre-baking the sandwich structure member 15 under a heat treatment condition in which the resin 7 is not completely cured. The resin 7 applied to the steel sheet 11 in the resin application step S1 is adjusted to have viscosity suitable for the application. When press molding is performed as it is without heat curing, the resin 7 leaks out from between the steel sheet 11 and the steel sheet patch 13 due to pressurization at the time of the press molding, and a problem that a predetermined resin thickness cannot be secured, or the like is generated.

In order to prevent the leakage of the resin 7 at the time of the press molding, it is necessary to heat and cure the resin 7 before the press molding to have certain or higher viscosity (or elastic modulus). However, as described above, when the resin 7 is completely cured before the press molding, the resin layer is fractured at the time of the press molding, and the collision energy absorbing performance of the automobile part 1 is deteriorated. Thus, in the pre-baking step S5, the sandwich structure member 15 is pre-baked in such a manner that the resin 7 has a physical property suitable for the press molding. The physical property of the resin suitable for the press molding will be described with reference to FIG. 3.

Although the term "leakage of resin" has been used in the description above, this is expression assuming that the resin is in a state having fluidity (uncured state) at the time of the press molding. In the present embodiment, since the fluidity of the resin is lost by the pre-baking of the resin before the press molding, the "leakage of resin" is less likely to be generated at the time of the press molding after the pre-baking. However, when the pre-baking is insufficient, the resin may be deformed and the resin may protrude from between the steel sheets. There is no problem in manufacturing as long as the protrusion is small enough in such a manner that the resin does not adhere to the die. However, there is a problem that the resin adheres to the die and continuous manufacturing becomes difficult as the protrusion increases.

In the following description, a phenomenon in which the resin has the fluidity at the time of the press molding and the resin is pushed out into the die by a pressing pressure is referred to as the "leakage of resin (leakage)", and a phenomenon in which the resin loses the fluidity at the time of the press molding and the resin is exposed from between the steel sheets by the pressing pressure, specifically, a phenomenon in which the resin is exposed to an extent that the resin adheres to the die is referred to as the "protrusion of resin". There is no problem in manufacturing as long as a degree of the exposure of the resin is small and the protrusion is such an extent that the resin does not adhere to the die. Thus, the protrusion is not included in the problematic "protrusion of resin". The protrusion having no problem is, for example, protrusion in a semi-arc form having a radius (mm) equal to or less than 0.5 times the total thickness (mm) of a steel sheet thickness before the molding + a resin thickness + a steel sheet patch thickness from a steel sheet edge of the sandwich structure member.

FIG. 3 is a graph conceptually illustrating a relationship between heating time and the viscosity, elastic modulus, and ductility of the resin of when a certain thermosetting resin is heated at 170°C. 170°C is a heat treatment temperature of when resin of a general structural adhesive used for manufacturing of an automobile is baked. As a reference, a baking condition (main baking condition) of completely curing the resin of the automobile structure adhesive is generally set to a heating temperature of 150 to 170°C and a heating time of about 15 minutes although slightly varying depending on a type of the resin.

As indicated by a curve A in FIG. 3, the resin that is in a liquid form before heating is gradually cured by the heating, and the elastic modulus increases. At this time, as indicated by a curve B, the viscosity of the resin also increases with the elastic modulus. On the other hand, as indicated by a curve C, the ductility of the resin decreases contrary to the increase in the elastic modulus. When the resin is completely cured with a lapse of the heating time, the change in the elastic modulus and the ductility decreases and asymptotically approaches almost constant (curing completion region). In addition, the viscosity of the thermosetting resin exponentially increases toward the curing completion region, and the thermosetting resin loses the fluidity and changes into a solid.

A broken-line arrow i in the drawing indicates an elastic modulus range of the resin 7 in which range the protrusion of the resin 7 can be prevented when the sandwich structure member 15 is press-molded. That is, when the elastic modulus indicated by the curve A is higher than that indicated by the broken-line arrow i, the protrusion of the resin at the time of the press molding can be prevented. In addition, a broken-line arrow ii in the drawing indicates a ductility range of the resin 7 in which range the resin 7 can follow deformation of the steel sheet when the sandwich structure member 15 is press-molded. That is, when the ductility indicated by the curve C is higher than that indicated by the broken-line arrow ii, the resin fracture at the time of the press molding can be prevented.

In a case where the sandwich structure member 15 is heated for a heating time under the related-art main baking condition (such as 15 minutes), since the resin 7 has a property in the curing completion region, the resin does not protrude from between the steel sheet 11 and the patch 9 due to pressurization at the time of the press molding. However, since the ductility is lower than that indicated by the broken-line arrow ii, the resin cannot follow the deformation of the steel sheet and the resin layer is fractured.

Thus, by heating the resin under such a heating condition that the elastic modulus of the resin is equal to or greater than that indicated by the broken-line arrow i and the ductility is equal to or greater than that indicated by the broken-line arrow ii, it is possible to bring the resin into a state excellent in press-moldability. In the example of FIG. 3, by setting the heating time in the pre-baking step S5 to a range equal to or longer than the heating time t1 of when the curve A (elastic modulus) intersects with the broken line i and equal to or lower than the heating time t2 of when the curve C (ductility) intersects with the broken-line ii, both the elastic modulus and the ductility in the physical property of the resin after the heating become values suitable for the press molding, and it is possible to prevent both the protrusion and the fracture of the resin at the time of the press molding.

As an example of a specific heat treatment condition, it is preferable to set the heating temperature to 140 to 210°C and the heating time to 4 seconds to 35 seconds, which are the same level as those of the related-art main baking condition. When the pre-baking is performed under such a heat treatment condition, the viscosity of the resin 7 is about 40 to 90% of that in the curing completion region, and the ductility of the resin 7 is about 2 to 7 times that in the curing completion region.

As will be described in detail in examples described later, as a physical property suitable for the press molding, that is, the physical property of the resin which property prevents the protrusion of the resin and also prevents the resin fracture at the time of the press molding, the elastic modulus is 45 MPa or more, and the ductility of the resin is 10% or more. In the above, a lower limit value of the elastic modulus is defined from a viewpoint of preventing the protrusion of the resin at the time of the press molding, and a lower limit value of the ductility is defined from a viewpoint of preventing the fracture of the resin at the time of the press molding. However, it does not mean that there is no upper limit value in the elastic modulus and the ductility.

As illustrated in FIG. 3, generally, in the elastic modulus and ductility of the resin, there is a relationship that the ductility becomes smaller as the elastic modulus becomes larger and the elastic modulus becomes smaller as the ductility becomes larger in the same resin. Thus, when the lower limit value of the elastic modulus is defined in a viewpoint of preventing the protrusion of the resin, a value of the ductility at that time (value at heating time t1 in FIG. 3) is an upper limit value of the ductility. When the lower limit value of the ductility is defined in a viewpoint of preventing the fracture of the resin, a value of the elastic modulus at that time (value at heating time t2 in FIG. 3) is an upper limit value of the elastic modulus. As described above, when the lower limit values of the elastic modulus and the ductility are defined, a range of the elastic modulus suitable for the press molding and a range of the ductility are naturally determined.

As described above, by pre-baking the resin 7 in such a manner that the resin 7 has the physical property suitable for the press molding, it is possible to keep the ductility of the resin 7 high and prevent the fracture of the resin layer due to the press molding while making the elastic modulus of the resin 7 higher than that at the time of the application and preventing the protrusion of the resin at the time of the press molding. In addition, since the heating time is as extremely short as 4 to 35 seconds as compared with a case where the sandwich structure member 15 is heated under the related-art main baking condition (such as 15 minutes), manufacturing time can also be shortened.

The method of the pre-baking is not specifically limited. For example, a method of heating the sandwich structure member 15 by insertion into a high-temperature furnace (oven) in which an ambient temperature is kept constant, or a method of heating the sandwich structure member 15 by using direct electrification heating or high frequency induction heating is conceivable.

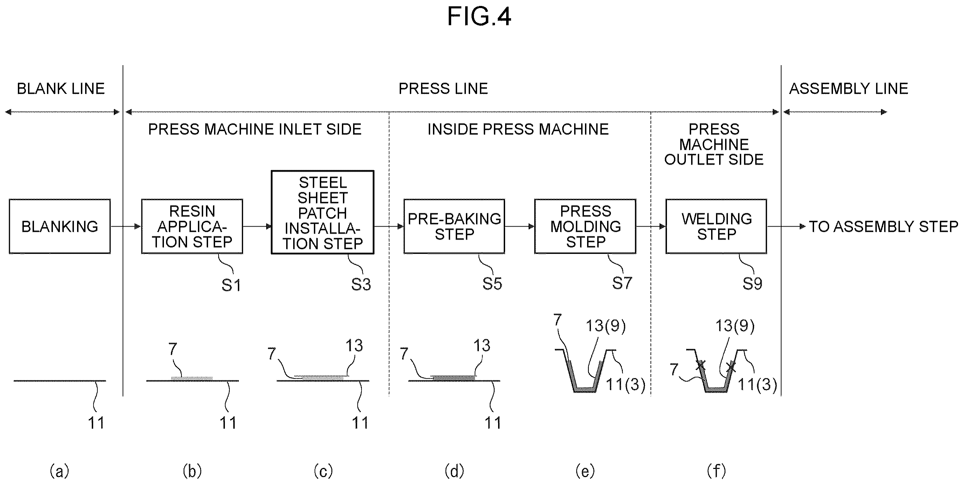

The above is an example in which the pre-baking step S5 is performed by a device such as an oven arranged on an inlet side of a press machine, that is, on an upstream side of the press machine in the press line. However, the pre-baking step S5 may be performed in the press machine as illustrated in FIG. 4. As a pre-baking method in a case of FIG. 4, for example, a method in which a molding die used in the press molding step S7 is heated to a predetermined temperature by the direct electrification heating or the high frequency induction heating, the sandwich structure member 15 is loaded on the heated molding die, and standby is performed for predetermined time (4 to 35 seconds) is conceivable.

### <Press molding step>

The press molding step S7 is a step of press molding the sandwich structure member 15 pre-baked in the pre-baking step S5 into a part shape of the automobile part. Here, as illustrated in part (e) of FIG. 1, the sandwich structure member 15 is press-molded into a part shape of the outer part 3 of the automobile part 1. Since the sandwich structure member 15 is pre-baked in the pre-baking step S5, the viscosity of the resin 7 is higher than that at the time of the application, whereby the resin 7 does not leak or protrude from between the steel sheet 11 and the steel sheet patch 13 even when pressurized at the time of the press molding. In addition, since the resin 7 is not completely cured, the ductility of the resin 7 is kept in a high state, and the fracture of the resin layer due to the press molding can be prevented.

### <Welding step>

As illustrated in part (f) of FIG. 1, the welding step S9 is a step of welding the steel sheet 11 and the steel sheet patch 13 of the automobile part 1 press-molded in the press molding step S7. The part press-molded in the press molding step S7 is transferred to an outlet side of the press machine by the transfer device. A robot equipped with a spot welding gun is arranged on the outlet side of the press machine, and the steel sheet patch 13 (patch 9) is spot-welded to the steel sheet 11 (outer part 3) (portion marked with × in part (f) of FIG. 1) by the spot welding gun-equipped robot.

When the sandwich structure member 15 is press-molded, the resin 7 is crimped to the steel sheet 11 and the steel sheet patch 13 by a high surface pressure, and further adhered to the steel sheet 11 and the steel sheet patch 13 with predetermined adhesive strength through a main baking step described later, whereby the welding step S9 can be omitted. However, since the automobile part 1 of the present embodiment absorbs the collision energy by being axially crushed or bending-crushed, and a collision energy absorption characteristic is deteriorated when the patch 9 is peeled off from the resin 7 in the deformation process, it is preferable to fix the steel sheet patch 13 to the steel sheet 11.

The part (f) of FIG. 1 becomes the automobile part 1 of FIG. 2 by being transferred to the assembly line and by joining of the inner part 5. The resin 7 of the automobile part 1 manufactured as described above adheres to the outer part 3 and the patch 9 with predetermined strength by being completely cured by the subsequent main baking step. Hereinafter, an example in which the main baking step is performed by utilization of electrodeposition coating generally performed in automobile manufacturing will be described.

After the automobile part 1 is manufactured by joining of the inner part 5 to the part (f) of FIG. 1, the automobile part 1 is assembled as the vehicle body. The vehicle body is immersed in electrodeposition coating, and is transferred to a drying furnace (oven) or the like and heat-treated after a coating layer is formed on a surface by electrodeposition. The resin 7 of the automobile part 1 is completely cured by the drying heat. As described above, the drying step of the electrodeposition coating performed on the vehicle body assembled by utilization of the automobile part 1 can be positioned as the main baking step of the present embodiment.

The main baking step performed on the automobile part 1 is not limited to the above, and may be performed before the vehicle body assembly. For example, the automobile part 1 before the vehicle body assembly may be charged into a high-temperature furnace (oven) in which an ambient temperature is kept constant and be heated, or the automobile part 1 before the vehicle body assembly may be heated by utilization of direct electrification heating or high frequency induction heating.

In any case, the resin 7 adheres to the outer part 3 and the patch 9 with the predetermined adhesive strength by adhesiveness of the resin itself by heat treatment of the automobile part 1 at a predetermined temperature and for predetermined time. The heat treatment condition in the main baking step, that is, the heat treatment condition for completely curing the resin 7 is, as described above, the heating temperature of 150 to 170°C and the heating time of about 15 minutes. However, since the heat treatment condition varies depending on a type of the resin 7, it is preferable to appropriately adjust the adhesive strength of the resin 7 after the heating to a predetermined value (such as 10 MPa or more).

As described above, according to the present embodiment, since the sandwich structure member 15 is pre-baked under the heat treatment condition, in which the resin 7 is not completely cured, and then press-molded into a part shape, it is possible to perform the press molding without the leakage or protrusion of the resin 7 and to prevent the fracture of the resin 7 at the time of the molding. Thus, it is possible to manufacture the automobile part 1 having required collision energy absorbing performance and vibration-damping properties.

In addition, as compared with the related-art manufacturing method in which each of the outer part 3 and the patch 9 is press-molded, a series of steps can be completed in the one press line in the present embodiment, whereby productivity of the automobile part 1 can be improved.

Furthermore, since the resin 7 is applied to the steel sheet 11 that is the blank material before the outer part 3 is press-molded, the resin 7 can be applied with a uniform thickness without being limited by a surface uneven shape of the part as compared with a case where the resin 7 is applied to the part after the press molding. As a result, variations in the collision energy absorbing performance and the vibration-damping performance of the automobile part 1 can be reduced.

Although the resin 7 in a coating material form is applied to the steel sheet 11 in the above manufacturing method, a resin pasting step of pasting the resin 7 formed in a sheet shape may be included instead of the resin application step S1. In a case of pasting the sheet-shaped resin 7, for example, the sheet-shaped resin 7 is pasted to the steel sheet 11 by utilization of a lamination facility. At that time, the resin 7 may be temporarily fixed to the steel sheet 11 by utilization of an adhesive tape or an adhesive. In addition, when the steel sheet patch 13 is installed in such a manner as to cover the resin 7, the resin 7 and the steel sheet patch 13 may be temporarily fixed by utilization of the adhesive tape or the adhesive. However, in a case where the sheet-shaped resin 7 itself has an initial adhesiveness like a double-sided tape, it is not necessary to use the adhesive tape or the adhesive.

Although it has been described that the application thickness in a case where the resin 7 is applied is preferably 0.2 mm or more at which the resin 7 can be applied with the uniform thickness, the thickness of the resin 7 is not limited thereto in a case where the sheet-shaped resin 7 is pasted. A lower limit of the thickness of the resin 7 in the present invention only needs to be a thickness with which the resin 7 can be formed uniformly, and the sheet thickness may be about 20 µm in a case of the sheet-shaped resin 7. An upper limit of the sheet thickness of the resin 7 is preferably 3 mm or less as in a case of the application from a viewpoint of the cost.

Since the sheet-shaped resin 7 has a certain degree of hardness, the leakage is hardly generated during the press molding as compared with the resin 7 in the coating material form. However, the hardness can be adjusted to hardness suitable for the press molding step S7 (hardness at which the protrusion is not generated) by the pre-baking. However, in a case where the sheet-shaped resin 7 has hardness enough to withstand the press molding (resin 7 does not protrude) and is not fractured during the press molding, the pre-baking step S5 may be omitted.

In addition, in the example of FIG. 1, the resin application step S1 to the pre-baking step S5 are performed in the press line that performs the press molding of the sandwich structure member 15 into the part shape. However, these steps are not necessarily performed in the same press line. For example, a manufacturing line that manufactures the sandwich structure member 15 and a press line that performs the press molding of the sandwich structure member 15 into the part shape may be provided separately. In that case, after the resin application step S1 to the pre-baking step S5 are performed in the manufacturing line of the sandwich structure member 15, the manufactured sandwich structure member 15 is transferred to the press line by a transfer device, and the press molding step S7 is performed.

In addition, the welding step S9 is not necessarily performed in the press line. For example, after the press molding step S7 is performed, the part (e) of FIG. 1 may be transferred to the assembly line, and the welding step S9 may be performed when the inner part 5 is joined in the assembly line.

### [Example]

Operational effects of the manufacturing method of the present invention will be described on the basis of a specific example. In the present example, the resin 7 was applied or pasted to the steel sheet 11 having a sheet thickness of 1.4 mm and tensile strength of 1470 MPa class as illustrated in part (a) of FIG. 5 or part (a) of FIG. 6, and then the steel sheet patch 13 having a sheet thickness of 0.4 mm and tensile strength of 270 MPa class was installed and the sandwich structure member 15 was formed as illustrated in part (b) of FIG. 5 or part (b) FIG. 6. The application thickness (or sheet thickness) of the resin 7 was set within a range of 0.2 to 3 mm. Then, the sandwich structure member 15 was pre-baked by various heating methods and under various heat treatment conditions (heating temperature 140 to 210°C and heating time 4 to 35 seconds). The heating method was any one of direct electrification heating (electrification), a high-temperature furnace (oven), and die heating (molding die used in the press molding step was heated to a predetermined temperature by direct electrification heating or high frequency induction heating). FIG. 5 is a view illustrating an example in which the resin 7 was applied to the entire steel sheet 11 (excluding a portion to be welded after the press molding) (resin·range "all" in Table 1), and FIG. 6 is a view illustrating an example in which the resin 7 is applied only to a portion of the steel sheet 11 which portion can become the shoulder portion 3b of the outer part 3 (resin·range "shoulder portion" in Table 1).

The pre-baked sandwich structure member 15 was press-molded into the part shape of the outer part 3 illustrated in FIG. 2, and press-moldability thereof was evaluated. Here, presence or absence of the protrusion of the resin 7 from the outer part 3 and the patch 9 after the press molding was observed.

With respect to the evaluation of the protrusion of the resin 7, a case where the resin did not protrude from the steel sheet at all and a case where the resin slightly protruded but did not adhere to the die were evaluated as "absent", and a case where the resin largely protruded from the steel sheet and adhered to the die was evaluated as "present". Specifically, protrusion of a semicircular shape having a radius (mm) equal to or smaller than a length of 0.5 times of a total sheet thickness (mm) of a steel sheet thickness before the molding + a resin thickness + a steel sheet patch thickness from a steel sheet edge of the sandwich structure member was evaluated as "absent", and was distinguished from the protrusion that causes a problem in manufacturing.

Then, after the inner part 5 was welded to the press-molded outer part 3 and assembled into the automobile part 1 of FIG. 2, heating at 170°C was performed for 15 minutes and the main baking was performed. Then, an axial crush test was performed on the automobile part 1 subjected to the main baking.

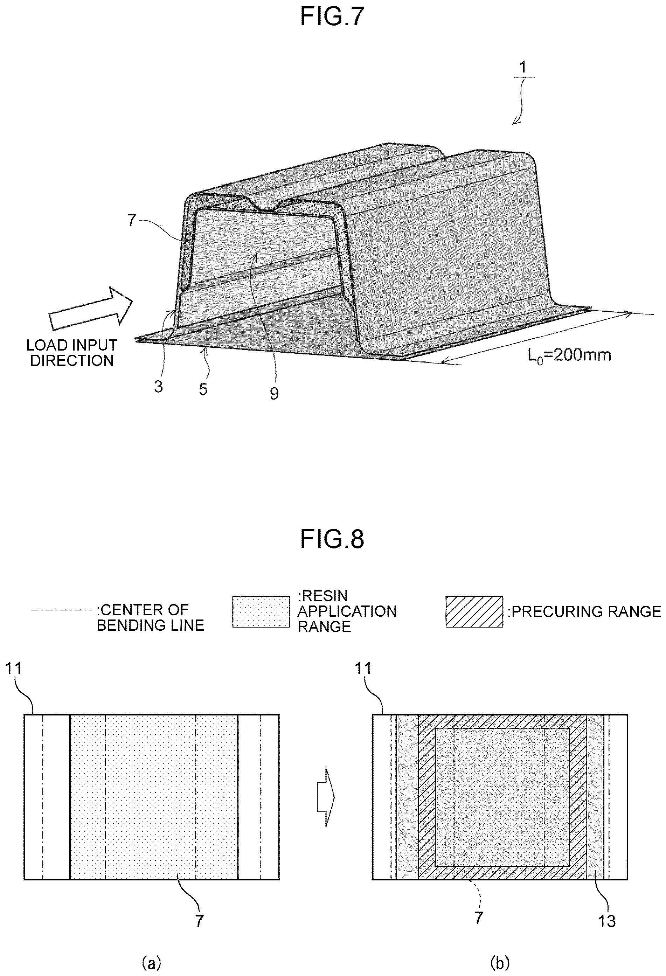

In the axial crush test, as illustrated in FIG. 7, a load-stroke curve of when a load was input at a test speed of 17.8 m/s in an axial direction of the automobile part 1 and a test body length was axially crushed and deformed by 80 mm from 200 mm to 120 mm was measured, and absorbed energy was calculated. In addition, a deformation state and presence or absence of fracture generation of the outer part 3 were observed by high-speed camera photographing. A configuration of each evaluation part, a heat treatment condition of the pre-baking, an evaluation result of press-moldability, and an evaluation result of an axial crush test are illustrated in Table 1.

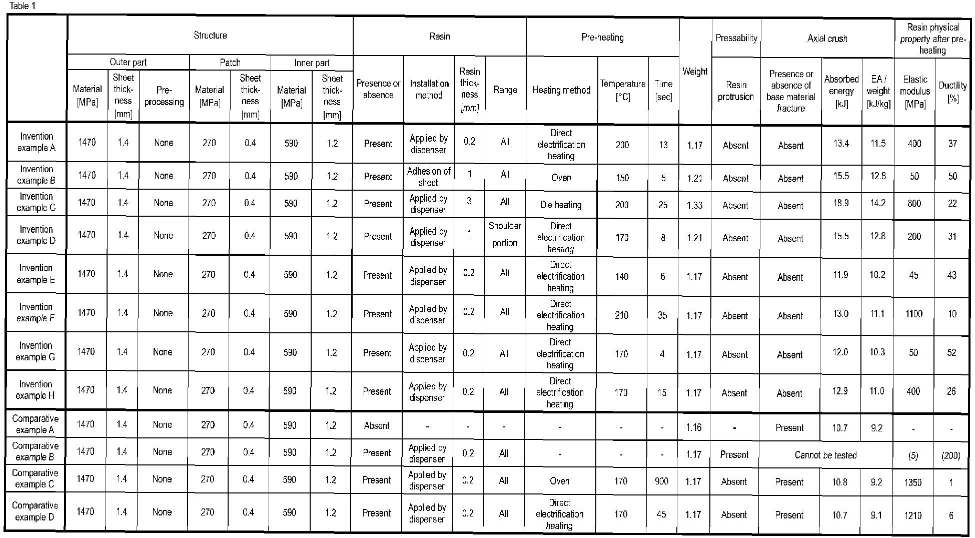

An invention example A is an example in which the resin 7 was applied at a thickness of 0.2 mm in the range of part (a) of FIG. 5 with a dispenser, and was pre-baked at 200°C for 13 seconds by direct electrification heating after the patch 9 was stacked. Test body weight was 1.17 kg and no resin protrusion was found after the pressing. As a result of the axial crush test, there was no base material (outer part 3) fracture, the absorbed energy was 13.4 kJ, and EA/weight (energy absorption amount per unit weight) was 11.5 kJ/kg.

An invention example B is an example in which the sheet-shaped resin 7 having a thickness of 1 mm was temporarily fixed in the range of part (a) of FIG. 5 with an adhesive tape, and was pre-baked in an oven at 150°C for 5 seconds after the patch 9 was stacked. Test body weight was 1.21 kg and no resin protrusion was found after the pressing. In addition, as a result of the axial crush test, there was no base material fracture, the absorbed energy was 15.5 kJ, and EA/weight was 12.8 kJ/kg.

An invention example C is an example in which the resin 7 was applied at a thickness of 3 mm in the range of part (a) of FIG. 5 with a dispenser, and was pre-baked for 25 seconds with a die, which was heated to 200°C, after the patch 9 was stacked. Test body weight was 1.33 kg and no resin protrusion was found after the pressing. In addition, as a result of the axial crush test, there was no base material fracture, the absorbed energy was 18.9 kJ, and EA/weight was 14.2 kJ/kg.

An invention example D is an example in which the resin 7 was applied at a thickness of 1 mm in the range of part (a) of FIG. 6 with a dispenser, and then pre-baked at 170°C for 8 seconds by direct electrification heating after the patch 9 was stacked. Test body weight was 1.21 kg and no resin protrusion was found after the pressing. In addition, as a result of the axial crush test, there was no base material fracture, the absorbed energy was 15.5 kJ, and EA/weight was 12.8 kJ/kg.

An invention example E is an example in which the resin 7 was applied at a thickness of 0.2 mm in the range of part (a) of FIG. 5 with a dispenser, and pre-baked at 140°C for 6 seconds by direct electrification heating after the patch 9 was stacked. Test body weight was 1.17 kg and no resin protrusion was found after the pressing. In addition, as a result of the axial crush test, there was no base material fracture. Although being lower than that in the invention example A, the absorbed energy was 11.9 kJ that is higher than that in a comparative example A (example without the resin 7) (described later), and EA/weight was 10.2 kJ/kg.

An invention example F is an example in which the resin 7 was applied at a thickness of 0.2 mm in the range of part (a) of FIG. 5 with a dispenser, and pre-baked at 210°C for 35 seconds by direct electrification heating after the patch 9 was stacked. Test body weight was 1.17 kg and no resin protrusion was found after the pressing. In addition, as a result of the axial crush test, there was no base material fracture. The absorbed energy was 13.0 kJ that was higher than that of the comparative example A (example without the resin 7) (described later), and EA/weight was 11.1 kJ/kg.

An invention example G is an example in which the resin 7 was applied at a thickness of 0.2 mm in the range of part (a) of FIG. 5 with a dispenser, and pre-baked at 170°C for 4 seconds by direct electrification heating after the patch 9 was stacked. Test body weight was 1.17 kg and no resin protrusion was found after the pressing. In addition, as a result of the axial crush test, there was no base material fracture. The absorbed energy was 12.0 kJ that was higher than that of the comparative example A (example without the resin 7) (described later), and EA/weight was 10.3 kJ/kg.

An invention example H is an example in which the resin 7 was applied at a thickness of 0.2 mm in the range of part (a) of FIG. 5 with a dispenser, and then pre-baked at 170°C for 15 seconds by direct electrification heating after the patch 9 was stacked. Test body weight was 1.17 kg and no resin protrusion was found after the pressing. In addition, as a result of the axial crush test, there was no base material fracture. The absorbed energy was 12.9 kJ that is higher than that of the comparative example A (example without the resin 7) (described later), and EA/weight was 11.0 kJ/kg.

The comparative example A is an example in which the resin 7 is not included. In a case of the comparative example A having no sandwich structure, a base material fracture was observed as a result of the axial crush test. In addition, the absorbed energy was 10.7 kJ, and EA/weight was 9.2 kJ/kg.

A comparative example B is an example in which pre-baking is not performed although the resin 7 is included. The resin that was applied and not pre-baked remarkably protruded in press working. In addition, the axial crush test was not performed since there was a concern that the resin having high fluidity might be scattered around and a device and a measuring instrument might be damaged.

A comparative example C is an example in which the resin 7 was applied at a thickness of 0.2 mm in the range of part (a) of FIG. 5 with a dispenser, and main baking was performed in an oven at 170°C for 900 seconds (15 minutes) after the patch 9 was stacked. Test body weight was 1.17 kg and no resin protrusion was found after the pressing. However, as a result of the axial crush test, a base material fracture was observed, and an increase in the absorbed energy was hardly observed as compared with the comparative example A.

A comparative example D is an example in which the resin 7 was applied at a thickness of 0.2 mm in the range of part (a) of FIG. 5 with a dispenser, and was pre-baked at 170°C for 45 seconds by direct electrification heating after the patch 9 was stacked. Test body weight was 1.17 kg and no resin protrusion was found after the pressing. In addition, as a result of the axial crush test, a base material fracture was observed, and an increase in the absorbed energy was hardly observed as compared with the comparative example A.

As described above, in any of the invention examples A to H, protrusion of the resin 7 during press molding was not generated. Although the presence or absence of the fracture of the resin 7 at the time of the press molding cannot be visually evaluated, all of the invention examples A to H exhibited higher absorbed energy performance than the comparative examples A to D.

In addition, an elastic modulus and ductility of the resin after the pre-baking in each example in Table 1 were examined by the following method. First, a gap between two steel sheets was adjusted to 0.2 mm, an uncured resin was put therebetween, heating was performed under each pre-baking condition in Table 1, the steel sheets were peeled off, and a flat-sheet shaped resin of 0.2 mm was formed. Subsequently, the flat resin was processed into a dumbbell shape (JIS No. 6 dumbbell) and a test piece was generated, a tensile test was performed at a tensile speed of 2 mm/min until the resin was fractured, and a gauge length elongation amount at the time of the resin fracture was divided by an initial gauge length elongation amount (= 20 mm), and a percentage of the elongation was calculated as ductility of the test piece. In addition, from a stress-strain curve acquired by the tensile test, a slope of the stress (tensile strength) between strain amounts of 0 and 0.005 that were in an elastic range was calculated and used as the elastic modulus of the test piece. The result is illustrated in Table 1.

As described above, as a result of the measurement of the elastic modulus and ductility of the resin after the pre-baking under each pre-baking condition, it was found that the elastic modulus was 45 MPa or more and the ductility was 10% or more. That is, it was found that when the physical property of the resin after the pre-baking was that the elastic modulus was 45 MPa or more and the ductility was 10% or more, the resin did not protrude when the sandwich structure member was press-molded, and the high absorbed energy performance was exhibited in the axial crush test (resin fracture was not generated) as illustrated in Table 1.

None of the comparative examples B to D satisfied the condition that the elastic modulus was 45 MPa or more and the ductility was 10% or more. The resin protruded in a case where the elastic modulus was less than 45 MPa, and the resin was fractured in a case where the ductility was less than 10%. Thus, in a case where either the elastic modulus or the ductility does not satisfy the condition, it is not possible to prevent the protrusion and fracture of the resin at the time of the press molding.

As described above, it was found that it was possible to suppress the protrusion and fracture of the resin at the time of the press molding by performing the press molding after the pre-baking of the sandwich structure member in such a manner that the physical property of the pre-baked resin had the elastic modulus of 45 MPa or more and the ductility of 10% or more.

The test piece used in the tensile test was prepared under a condition that it was assumed that the resin thickness was the thinnest, that is, the ductility was the smallest within the range of the resin thickness defined by the present invention (0.2 mm to 3 mm). Thus, it is considered that the ductility does not fall below what is described in Table 1 and the resin is not fractured when pre-baking is performed under the similar heating condition within the range of the resin thickness defined by the present invention.

Incidentally, Patent Literature 6 described above discloses a technique of suppressing dropping of resin due to gravity by partially precuring the resin. Thus, it was examined whether protrusion of the resin at the time of press molding can be suppressed by such a technique, and a result thereof is illustrated in Table 2.

**Table 2**

| | Structure | | | | | | | Resin | | | | Precuring | | | Weight | Pressability |
|---|---|---|---|---|---|---|---|---|---|---|---|---|---|---|---|---|
| | Outer part | | | Patch | | Inner part | | Presence or absence | Installation method | Resin thickness [mm] | Range | Heating method | Temperature [°C] | Time [sec] | | Resin protrusion |
| | Material [MPa] | Sheet thickness [mm] | Preprocessing | Material [MPa] | Sheet thickness [mm] | Material [MPa] | Sheet thickness [mm] | | | | | | | | | |
| Comparative example E | 1470 | 1.4 | None | 270 | 0.4 | 590 | 1.2 | Present | Applied by dispenser | 0.2 | All | Induction heating | 200 | 13 | 1.17 | Present |
| Comparative example F | 1470 | 1.4 | None | 270 | 0.4 | 590 | 1.2 | Present | Adhesion of sheet | 1 | All | | 150 | 5 | 1.21 | Present |
| Comparative example G | 1470 | 1.4 | None | 270 | 0.4 | 590 | 1.2 | Present | Applied by dispenser | 3 | All | | 200 | 25 | 1.33 | Present |
| Comparative example H | 1470 | 1.4 | None | 270 | 0.4 | 590 | 1.2 | Present | Applied by dispenser | 1 | Shoulder portion | | 170 | 8 | 1.21 | Present |

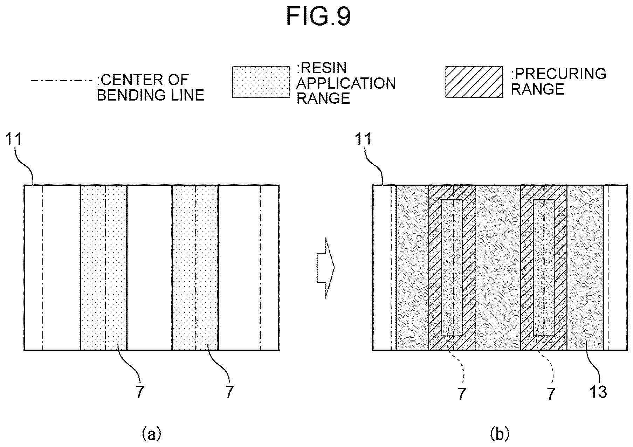

Comparative examples E to H in Table 2 are comparative examples according to the technique of Patent Literature 6, in which a resin thickness, a range in which the resin is provided, a heating temperature, and heating time are similar to those in the invention examples A to D in Table 1 and only a range in which the resin is cured is limited. Although resin of a portion to be a lower end region in an assembling posture is precured in Patent Literature 6, resin of an outer peripheral portion of applied (pasted) resin is precured in the comparative examples E to H as illustrated in FIG. 8 and FIG. 9. FIG. 8 is a view illustrating an example in which the resin 7 is applied to the entire steel sheet 11 (excluding a portion to be welded after the press molding) (resin·range "all" in Table 2), and FIG. 9 is an example in which the resin 7 is applied only to a portion of the steel sheet 11 which portion can be the shoulder portion 3b of the outer part 3 (resin·range "shoulder portion" in Table 2). As a heating method, high frequency induction heating was used with reference to Patent Literature 6.

The sandwich structure member 15 in which only the outer peripheral portion of the resin 7 was precured as described above was press-molded into the part shape of the outer part 3 illustrated in FIG. 2, and press-moldability thereof, that is, presence or absence of protrusion of the resin 7 from the outer part 3 and the patch 9 after the press molding was evaluated.

As a result, as illustrated in Table 2, none of the comparative examples E to H could suppress the protrusion of the resin at the time of the press molding. This is considered to be because a strong pressure was applied to the resin by the press molding, and the precured portion failed to withstand an internal pressure and was fractured.

As described above, although being effective in preventing dropping of the resin due to the gravity, the technique of Patent Literature 6 cannot prevent protrusion of the resin caused by strong pressure during the press molding. Thus, it has been indicated that the present invention is excellent as a method of manufacturing an automobile part having a sandwich structure as compared with the technique of Patent Literature 6.

### Industrial Applicability

According to the present invention, it is possible to provide a manufacturing method of an automobile part which method is capable of manufacturing an automobile part having a sandwich structure, in which resin is sandwiched between steel sheets (metal sheets), at a low cost and preventing a fracture of the resin in the manufacturing.

### Reference Signs List

1 AUTOMOBILE PART
3 OUTER PART
3a TOP PORTION
3b SHOULDER PORTION
3c SIDE WALL PORTION
3d FLANGE PORTION
5 INNER PART
7 RESIN
9 PATCH
11 STEEL SHEET
13 STEEL SHEET PATCH
15 SANDWICH STRUCTURE MEMBER

## Claims

1. A manufacturing method of an automobile part, the method comprising:
a resin application step of applying a thermosetting resin to a steel sheet before molding;
a steel sheet patch installation step of installing a steel sheet patch in such a manner as to cover the resin on the steel sheet to which the resin is applied;
a pre-baking step of pre-baking a sandwich structure member having a sandwich structure, in which the resin is sandwiched between the steel sheet and the steel sheet patch, in such a manner that the resin has an elastic modulus of 45 MPa or more and a ductility of 10% or more; and
a press molding step of press molding the pre-baked sandwich structure member into a part shape of the automobile part.

2. A manufacturing method of an automobile part, the method comprising:
a resin pasting step of pasting a thermosetting resin, which is formed in a sheet shape, to a steel sheet before molding;
a steel sheet patch installation step of installing a steel sheet patch in such a manner as to cover the resin on the steel sheet to which the resin is pasted;
a pre-baking step of pre-baking a sandwich structure member having a sandwich structure, in which the resin is sandwiched between the steel sheet and the steel sheet patch, in such a manner that the resin has an elastic modulus of 45 MPa or more and ductility of 10% or more; and
a press molding step of press molding the pre-baked sandwich structure member into a part shape of the automobile part.

3. The manufacturing method of an automobile part according to claim 1 or 2, further comprising a welding step of welding the steel sheet and the steel sheet patch of the automobile part press-molded by the press molding step.

4. The manufacturing method of an automobile part according to any one of claims 1 to 3, wherein the resin has a thickness of 0.2 mm or more and 3 mm or less.

5. The manufacturing method of an automobile part according to any one of claims 1 to 4, wherein the resin is a rubber-modified epoxy resin.
